# EUROPÄISCHE PATENTSCHRIFT

(11) **EP 1 087 224 B1**
(45) Veröffentlichungstag und Bekanntmachung des Hinweises auf die Patenterteilung: **07.04.2004**
(21) Anmeldenummer: 00890271.0
(22) Anmeldetag: 05.09.2000
(51) Int. Cl.: G01N 27/28

(54) **Elektrochemische Messvorrichtung mit planarem Sensorträger**
Electrochemical measuring device with planar sensor support
Dispositif de mesure électrochimique avec un support de capteur planaire

(30) Priorität: 21.09.1999 AT 161499
(43) Veröffentlichungstag der Anmeldung: 28.03.2001
(73) Patentinhaber: F.HOFFMANN-LA ROCHE AG, 4070 Basel (CH)
(72) Erfinder: Huber, Wolfgang, Ing., 8501 Lieboch (AT); Steinböck, Wolf-Dietrich, 8020 Graz (AT); Pucher, Günther, 8403 Lebring (AT); Schaffer, Bernhard, Mag. Dr., 8045 Graz (AT); Ritter, Christoph, Dr., 8045 Graz (AT)
(74) Vertreter: Babeluk, Michael, Dipl.-Ing. Mag.

(56) Entgegenhaltungen:
- EP-A- 0 579 997
- EP-A- 0 625 704
- EP-A- 0 690 134
- EP-A- 0 846 947
- US-A- 5 520 787

## Beschreibung

Die Erfindung betrifft eine elektrochemische Messvorrichtung mit einem im wesentlichen planaren Sensorträger, welcher zumindest einen elektrochemischen Sensor aufweist, mit einem Abdeckteil, in welchem ein tunnelförmiger Messkanal ausgeformt ist, wobei parallel zum Messkanal zumindest eine Führungsnut ausgebildet ist, mit einem zwischen dem Sensorträger und dem Abdeckteil angeordneten Dichtelement zum Abdichten des Messkanals, wobei das Dichtelement an der Längsseite Führungskörper aufweist, wovon zumindest einer in die Führungsnut des Abdeckteils ragt und am Dichtelement den Messkanal begrenzende schmale Dichtlippen angeformt sind.

Aus unterschiedlichen Gründen, wie Kostenminimierung, Miniaturisierung oder Automatisierung, werden mehrere Sensoren einer Messvorrichtung häufig auf einen planaren Sensorträger aufgebracht. Dies hat den Vorteil, dass man z.B. Dünnschicht- oder Dickschichttechniken zur Herstellung der sensitiven Bereiche der Sensoren und deren Kontaktierung heranziehen kann.

Will man nun einen derartigen Sensorträger mit den darauf angeordneten Sensoren in einen Messkanal integrieren, so muss man über den planaren Sensorträger mit Hilfe eines weiteren Bauteils einen Messkanal ausbilden, wobei sich in der Regel ein tunnelförmiger Querschnitt des Messkanals ergibt.

Wenn mehrere derartige Messvorrichtungen aneinander gefügt werden, bzw. eine derartige Messvorrichtung in einen Analysator eingesetzt wird, wo entsprechende Anschlüsse für die Probenzu- bzw. -abfuhr vorgesehen sind, ergibt sich das Problem, dass man in der Regel einen Probenkanal mit kreisförmigen Querschnitt an einen Messkanal mit tunnelförmigen Querschnitt andocken muss.

Das Problem wird noch dadurch verschärft, dass zwischen dem Sensorträger und dem den eigentlichen Messkanal formenden Oberteil bzw. Abdeckteil eine Abdichtung zu erfolgen hat. Diese Abdichtung kann auf mehrere Arten erfolgen.

So beschreibt beispielsweise die US 5,520,787 A eine Messzelle, welche von zwei im wesentlichen ebenen Platten begrenzt ist, wobei die einzelnen Bauteile miteinander verklebt sind. Zwischen den beiden Platten ist ein Abstandhalter angeordnet, der aus einem Dichtungsmaterial hergestellt ist. Eine entsprechende Ausnehmung in diesem Abstandhalter bildet den Messkanal. Als Nachteilen ist hier anzumerken, dass die genaue Lage der seitlichen Kante des Messkanals und damit das Füllvolumen bei dieser Anordnung nicht definiert ist. Weiters kann ein Kontakt der Kleberschicht mit dem zu messenden Medium oder den Sensoren nicht ausgeschlossen werden. Bei bestimmten Messvorgängen bzw. Messmedien ist jedoch ein solcher Kontakt äußerst unerwünscht. Zusätzlich können Kleberdämpfe während der Produktion ein ernstes Problem für die Sensorqualität darstellen.

Weiters können die einzelnen Teile der Messvorrichtung thermisch verschweißt werden. Auch dies ist - speziell bei temperaturempfindlichen Substanzen im Sensor (z.B. Enzymsensoren) - unter Umständen kritisch. Bei einer thermischen Verschweißung können überdies alle quer zum Messkanal angeordneten Leiterbahnen unterbrochen bzw. zerstört werden. D.h. eine thermische Verschweißung kann nur dann verwendet werden, wenn die Sensoren mit einer Durchkontaktierung versehen sind, welche nur mit deutlich größerem Fertigungsaufwand realisierbar ist.

Als gängige Methode hat sich daher die Verwendung einer Dichtung aus einem Elastomer etabliert, wie beispielsweise in der EP 0 690 134 A geoffenbart. Daraus ist eine elektrochemische Messzelle bekannt, bei der eine Messkammer als Ausnehmung in einem Bauteil geformt ist, wobei die Messzelle an der gegenüberliegenden Seite durch eine Elektrodenplatte abgeschlossen ist. Zur Abdichtung ist ein Dichtelement vorgesehen, das eine Öffnung aufweist, die im wesentlichen der Ausnehmung der Messkammer entspricht. Diese Bauteile werden in einem mehrteiligen Gehäuse aufgenommen, das letztlich verschweißt wird. Das Dichtelement weist auf zwei Seiten einen wulstförmigen Rand auf, welcher in eine Freistellung des Gehäuses der Messzelle ragt. Nachteilig beim Zusammenbau der Messzelle ist, dass die Dichtung nicht bereits vor dem Aufsetzen des Sensorträgers in einer definierten Lage im Oberteil des Gehäuses festgehalten wird. Weiters erfolgt keine Fixierung der Lage im Bereich des Probenzu- bzw. Probenabflusses.

Eine elektrochemische Messvorrichtung der eingangs genannten Art ist aus der EP 0 846 947 A bekannt geworden. Darin wird ein längliches Dichtelement zur seitlichen Abdichtung eines Messkanals beschrieben, welches in Richtung zum Messkanal eine rundum laufende schmale Dichtlippe aufweist, deren Dicke beispielsweise 150 µm beträgt, so dass nur ein äußerst geringer Teil der Oberfläche des Messkanals von einem elastomeren Bauteil begrenzt wird. Eine exakt definierte Lage der Dichtung wird durch seitliche Führungskörper gewährleistet, welche in entsprechende Führungsnuten ragen, die im Abdeckteil jeweils parallel zum Messkanal ausgebildet sind. Ein die Dichtlippen an den Sensorträger anpressender Steg ist sowohl an den Längs- als auch den Schmalseiten des Dichtelementes am Abdeckteil angeformt und bewirkt in nachteiliger Weise im Bereich der Probenzu- und Probenabfuhr eine Unstetigkeit im Kavitätsverlauf.

Aufgabe der Erfindung ist es, ausgehend von der eingangs beschriebenen Vorrichtung, eine elektrochemische Messvorrichtung derart weiterzubilden, dass bei optimaler Dichtungsführung bzw. ausreichender Fixierung der Lage der Dichtungslippen ein optimaler Kavitätsverlauf im Inneren der Messvorrichtung erzielt wird.

Diese Aufgabe wird erfindungsgemäß dadurch gelöst, dass das Dichtelement an jeder Schmalseite einen in je eine Aussparung im Sensorträger ragenden Führungskörper aufweist, welche Führungskörper auf der vom Abdeckteil abgewandten Seite einer durch die Dichtlippen definierten Dichtungsebene liegen. Da eine vollständige Verlagerung der Führungsnuten in den Sensorträger daran scheitert, dass bei Vorliegen einer Nut die Herstellung der elektrischen Ableitungen mit planaren Massenfertigungstechnologien nicht durchführbar wäre, werden erfindungsgemäß zumindest jene Führungskörper auf die andere Seite der Dichtungsebene verlagert, welche sich im Bereich des Probenein- und Probenauslasses befinden. Vorteilhafterweise kann durch die erfindungsgemäße Ausbildung der Schmalseiten des Dichtelementes die Achse der Probenzu- bzw. Probenabfuhr näher an die Oberfläche des Sensorträgers herangebracht werden, wodurch die Stufe zwischen dem tunnelförmigen Querschnitt des Messkanals und dem kreisförmigen Querschnitt der Probenzu- bzw. Probenabfuhr verringert wird. Dadurch entsteht ein homogenerer Kavitätsverlauf, wodurch die Ausbildung von Luftblasen weitgehend vermieden und die Reinigung des Probenkanals erleichtert wird.

In einer vorteilhaften Weiterbildung der Erfindung ist vorgesehen, dass zwei längsseitige Führungskörper verwendet werden, welche auf der dem Abdeckteil zugewandten Seite der Dichtungsebene angeordnet sind und an beiden Enden in Richtung zur Achse des Probenkanals weisende Anformungen aufweisen, welche die an der Schmalseite des Dichtelementes angeordneten Führungskörper zumindest teilweise überlappen. Durch diese Maßnahme entsteht ein robustes Dichtelement, welches beim Zusammenbau der Messvorrichtung einfach in den entsprechenden Führungsnuten des Abdeckteils verankert werden kann. Bei dieser Ausführungsvariante kann auch ein dritter, längsseitiger Führungskörper des Dichtelementes auf der anderen Seite der Dichtungsebene vorgesehen sein, welcher in eine Führungsnut im Sensorträger ragt.

Weiters ist erfindungsgemäß vorgesehen, die Anschlüsse zur Zu- bzw. Abfuhr des zu untersuchenden Mediums zwischen den endseitigen Anformungen der längsseitigen Führungskörper anzuordnen.

Gemäß einer weiteren Ausführungsvariante der Erfindung sind zwei längsseitige Führungskörper des Dichtelementes auf unterschiedlichen Seiten der Dichtungsebene angeordnet, wobei eine Führungsnut für einen längsseitigen Führungskörper im Sensorträger parallel zur Achse des Messkanals ausgebildet ist.

Die Erfindung wird im folgenden anhand von Ausführungsbeispielen näher erläutert. Es zeigen:
- Fig. 1: einen Schnitt durch die erfindungsgemäße Messvorrichtung gemäß Linie I-I in Fig. 2,
- Fig. 2: einen Schnitt gemäß Linie II-II in Fig. 1,
- Fig. 3: eine Schnittdarstellung im Bereich der Probenzufuhr einer bekannten Vorrichtung,
- Fig. 4: einen Schnitt entlang der Linie IV-IV in Fig. 1,
- Fig. 5: eine Draufsicht auf den Sensorträger, die
- Fig. 6 und 7: dreidimensionale Darstellungen einer ersten Ausführungsvariante des Dichtelementes der erfindungsgemäßen Messvorrichtung, sowie die
- Fig. 8 und 9: weitere Ausführungsvarianten des Dichtelementes.

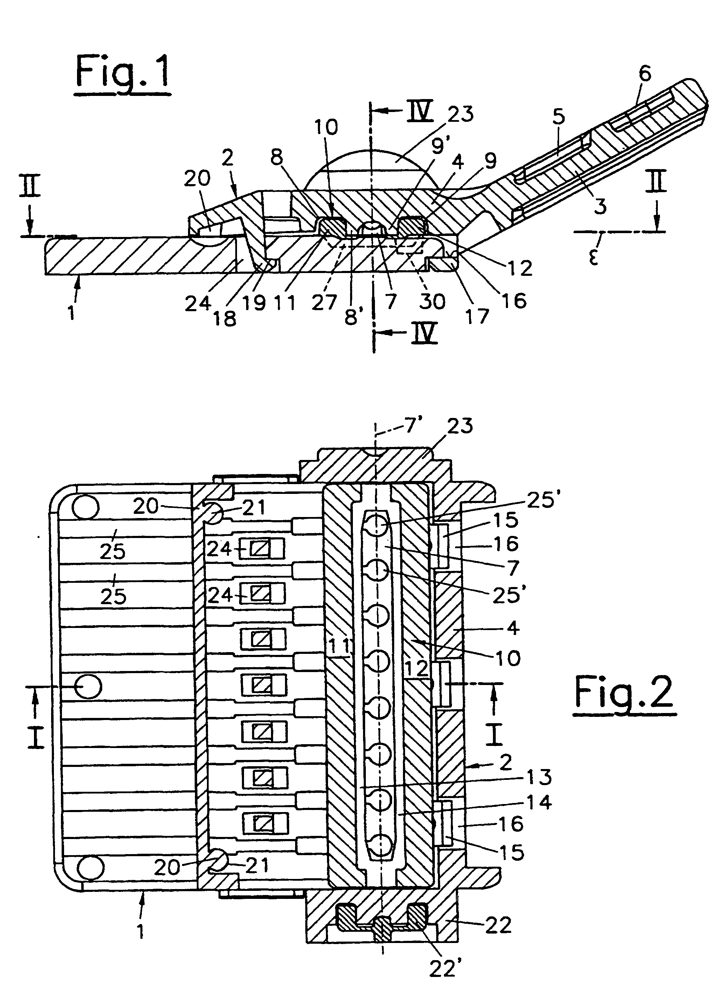

Die erfindungsgemäße Messvorrichtung besteht gemäß Fig. 1 und 2 aus einem Sensorträger 1 und einem Abdeckteil 2. Der Sensorträger 1 ist im wesentlichen planar ausgeführt. Der Abdeckteil 2 ist zur Erleichterung der Handhabung mit einem Handgriff 3 versehen, der vom eigentlichen Abdeckabschnitt 4 in einem stumpfen Winkel nach oben hin absteht und Griffmulden 5 und 6 aufweist. Im Abdeckabschnitt 4 ist der Messkanal 7 als sich in Längsrichtung erstreckende, zum Sensorteil 1 offene, tunnelförmige Nut ausgebildet. Parallel zum Messkanal 7 sind Führungsnuten 8 und 9 im Abdeckteil 2 angeordnet, die zur Aufnahme der Führungskörper 11, 12 eines Dichtelementes 10 vorgesehen sind. An den längsseitigen Führungskörpern 11 und 12 ist jeweils eine schmale Dichtlippe 13, 14 vorgesehen, welche von seitlichen Stegen 8', 9' an den Sensorträger 1 angepresst werden. Durch die an den Schmalseiten zusammenstoßenden Dichtlippen 13, 14 wird die eigentliche Abdichtung zwischen dem Sensorträger 1 und dem Abdeckteil 2 hergestellt.

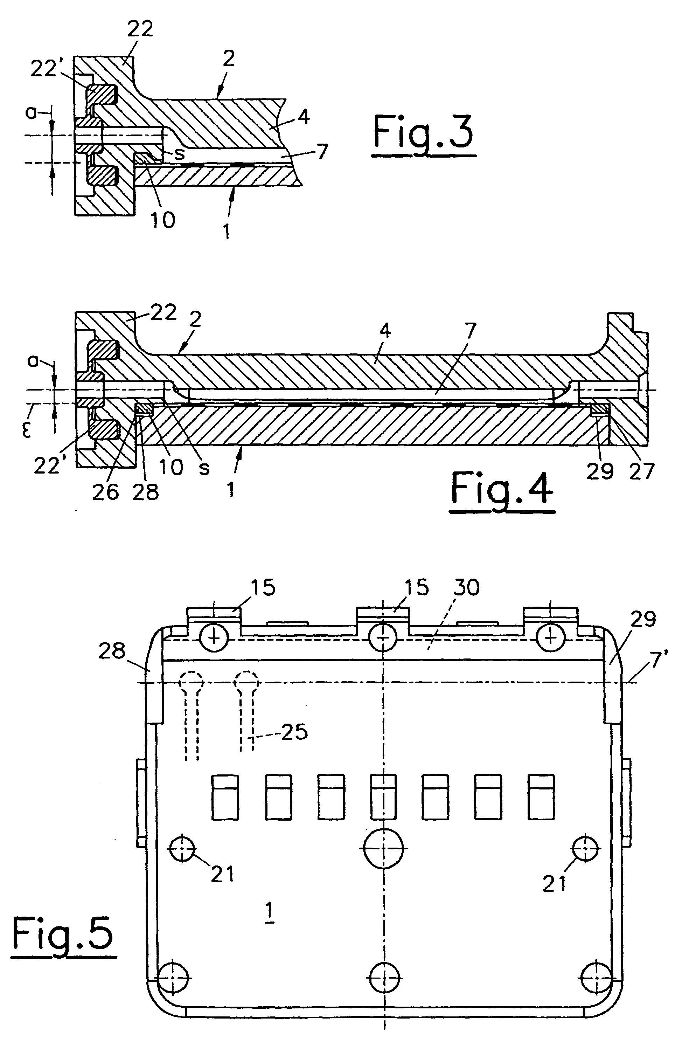

Das Dichtelement 10 weist an jeder Schmalseite Führungskörper 26, 27 auf, welche in Aussparungen 28, 29 im Sensorträger 1 ragen (siehe Fig. 4). Bezogen auf eine durch die Dichtlippen 13 und 14 definierten Dichtungsebene ε liegen somit die Führungskörper 11, 12 der Längsseite und die Führungskörper 26, 27 der Schmalseite auf unterschiedlichen Seiten der Dichtungsebene ε.

Wie insbesondere aus den Fig. 3 (Stand der Technik) und 4 (Erfindung) ersichtlich, hat die Verlagerung der Führungskörper 26, 27 der Schmalseite in entsprechende Aussparungen 28, 29 des Sensorträgers 1 zur Folge, dass der Abstand a zwischen der Achse der Probenzu- bzw. Probenabfuhr und der Oberfläche des Sensorträgers 1 in etwa halbiert wird, wodurch sich die Stufe s im Übergang vom kreisförmigen Querschnitt der Probenzu- bzw. Probenabfuhr zum tunnelförmigen Querschnitt des Probenkanals 7 wesentlich verkleinert. Die Aussparungen 28, 29 im Sensorträger 1 zur Aufnahme der Führungskörper 26, 27 sind in Draufsicht in Fig. 5 dargestellt.

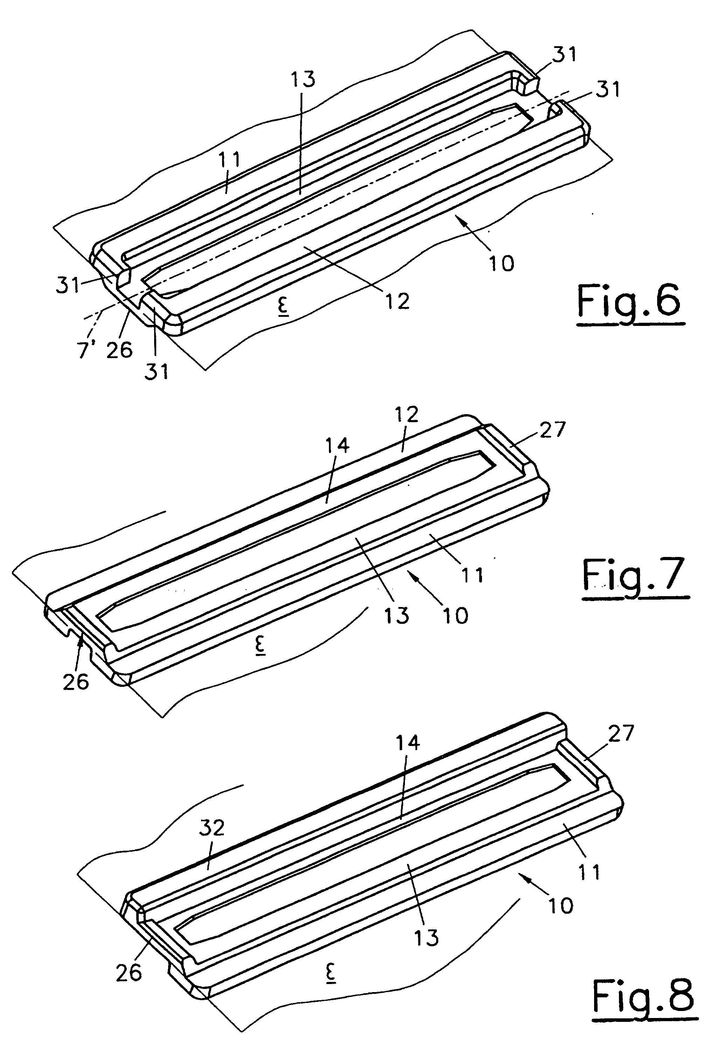

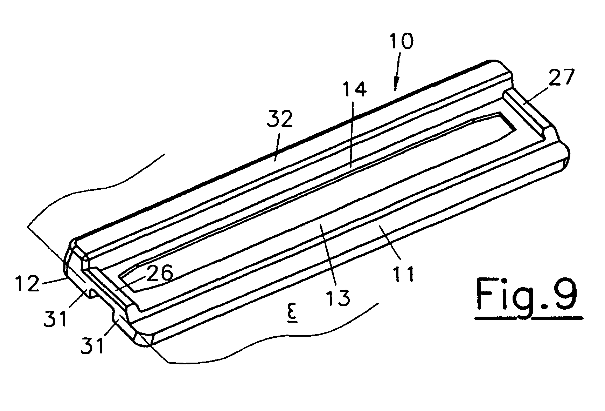

Bei einigen Ausführungsvarianten (siehe z.B. Fig. 8, Fig. 9) ist vorgesehen, dass ein längsseitiger Führungskörper 32 des Dichtelementes parallel zur Achse 7' des Messkanals in einer Führungsnut 30 des Sensorträgers 1 (strichliert in Fig. 1 und 5 angedeutet), angeordnet ist, wobei ein längsseitiger Führungskörper 11, nämlich jener im Bereich der Leiterbahnen 25, im Abdeckteil 2 verbleibt.

In den Fig. 6 und 7 ist das Dichtelement 10 in einer dreidimensionalen Ansicht von oben bzw. von unten dargestellt. Die Führungskörper 11 und 12 können an beiden Enden in Richtung zur Achse 7' des Probenkanals weisende Anformungen 31 aufweisen, welche die an der Schmalseite auf der anderen Seite der Dichtungsebene e angeordneten Führungskörper 26, 27 teilweise überlappen. Bei dieser Ausführungsvariante liegen die Anschlüsse zur Zu- bzw. Abfuhr des zu untersuchenden Mediums zwischen den endseitigen Anformungen 31 der längsseitigen Führungskörper 11 und 12.

Bei der Ausführungsvariante gemäß Fig. 8 sind die beiden längsseitigen Führungskörper 11 und 32 des Dichtelementes 10 auf unterschiedlichen Seiten der Dichtungsebene ε angeordnet, wobei der Führungskörper 32 in die Führungsnut 30 des Sensorträgers 1 ragt.

Fig. 9 zeigt eine weitere Ausführungsvariante des Dichtelementes 10 mit zwei längsseitigen Führungskörpem 11, 12 auf einer Seite der Dichtungsebene ε und einem dritten Führungskörper 32 auf der anderen Seite.

Die Verbindung zwischen dem Sensorträger 1 und dem Abdeckteil 2 erfolgt durch eine Reihe von Haltenasen 15 (siehe Fig. 1 und 2), die an einer Kante des Sensorträgers 1 entlang einer geraden Linie angeordnet sind, welche auf eine Reihe korrespondierender Rastflächen 16 aufgesetzt werden. Die Rastflächen 16 sind am Abdeckteil 2 in einem sich in Längsrichtung erstreckenden Vorsprung 17 ausgebildet. Nachdem die Haltenasen 15 auf die Rastflächen 16 aufgesetzt sind, werden der Sensorträger 1 und der Abdeckteil 2 um die Haltenase 15 als Drehpunkt zueinander geschwenkt. Dabei greifen Rasten 18, die vom Abdeckteil 2 nach unten vorstehen in Rastflächen 19 ein, die in Öffnungen 24 des Sensorteils 1 ausgebildet sind. Eine genaue Positionierung von Sensorbauteil 1 und Abdeckbauteil 2 wird durch Zentrierstifte 20 erreicht, die am Abdeckteil 2 nach unten hin vorstehen, und im zusammengebauten Zustand in Zentrierbohrungen 21 am Sensorträger 1 einrasten.

Die Zufuhr bzw. Abfuhr des zu untersuchenden Mediums erfolgt über Anschlüsse 22 bzw. 23, die jeweils an den Enden des Messkanals 7 am Abdeckteil 2 angeformt sind.

Der Sensorträger 1 weist in dargestellten Beispielen acht Leiterbahnen 25 auf, die jeweils zu Sensoren 25' führen, welche auf die plane Oberfläche durch an sich bekannte Dick- und/oder Dünnschichttechnologien (Sputtern, Siebdrucken, Dispensen, u.a.) aufgebracht werden können. Die Leiterbahnen dienen gleichzeitig zur Kontaktierung der Sensoren. Die Öffnungen 24, durch die hindurch die Rasten 18 eingeführt werden können, sind jeweils zwischen zwei Leiterbahnen 25 angeordnet.

Die vorliegende Erfindung ermöglicht die Bereitstellung einer Messkammer für Planarsensorik von besonders einfachem Aufbau, wobei der Messkanal eine genau definierte Geometrie aufweist und weitgehend frei von unerwünschten Materialien ist. Der Sensorträger 1 und der Abdeckbauteil 2 können transparent oder transluzent ausgeführt sein, um einerseits die Probe sehen zu können, und andererseits gegebenenfalls eine Beleuchtung von unten her durchführen zu können.

Der Messkanal 7 kann eine Länge von etwa 1 mm bis ca. 7 cm, vorzugsweise etwa 0,5 bis 4 cm aufweisen und ist ca. 0,1 bis 3 mm breit und ca. 0,1 bis 3 mm tief. Vorzugsweise beträgt die Breite ca. 1,5 mm und die Tiefe ebenfalls ca. 1,5 mm. Daraus ergibt sich ein Messkanalvolumen von ca. 1 bis 200 µl, vorzugsweise 20 bis 50 µl. Die Dichtlippe weist eine Dicke von 50 bis 300 µm, vorzugsweise eine Dicke von 150 µm auf.

Die erfindungsgemäße Vorrichtung ist für diagnostische Zwecke, vorzugsweise Blutplasma-, Serum- und Urinanalysen vorzüglich geeignet.

## Patentansprüche

1. Elektrochemische Messvorrichtung mit einem im wesentlichen planaren Sensorträger (1), welcher zumindest einen elektrochemischen Sensor aufweist, mit einem Abdeckteil (2), in welchem ein tunnelförmiger Messkanal (7) ausgeformt ist, wobei parallel zum Messkanal (7) zumindest eine Führungsnut (8, 9, 30) ausgebildet ist, mit einem zwischen dem Sensorträger (1) und dem Abdeckteil (2) angeordneten Dichtelement (10) zum Abdichten des Messkanals (7), wobei das Dichtelement (10) an der Längsseite Führungskörper (11, 12, 32) aufweist, wovon zumindest einer in die Führungsnut (8, 9) des Abdeckteils (2) ragt und am Dichtelement (10) den Messkanal (7) begrenzende schmale Dichtlippen (13, 14) angeformt sind, **dadurch gekennzeichnet, dass** das Dichtelement (10) an jeder Schmalseite einen in je eine Aussparung (28, 29) im Sensorträger (1) ragenden Führungskörper (26, 27) aufweist, welche Führungskörper (26, 27) auf der vom Abdeckteil (2) abgewandten Seite einer durch die Dichtlippen (13, 14) definierten Dichtungsebene (ε) liegen.

2. Messvorrichtung nach Anspruch 1, **dadurch gekennzeichnet, dass** zwei längsseitige Führungskörper (11, 12) vorgesehen sind, welche auf der dem Abdeckteil (2) zugewandten Seite der Dichtungsebene (ε) angeordnet sind und an beiden Enden in Richtung zur Achse (7') des Probenkanals (7) weisende Anformungen (31) aufweisen, welche die an der Schmalseite des Dichtelements (10) angeordneten Führungskörper (26, 27) zumindest teilweise überlappen.

3. Messvorrichtung nach Anspruch 1 oder 2, **dadurch gekennzeichnet, dass** ein dritter, längsseitiger Führungskörper (32) des Dichtelementes (10) auf der anderen Seite der Dichtungsebene (ε) vorgesehen ist, welcher in eine Führungsnut (30) im Sensorträger (1) ragt.

4. Messvorrichtung nach Anspruch 2 oder 3, **dadurch gekennzeichnet, dass** die Anschlüsse (22, 23) zur Zu- bzw. Abfuhr des zu untersuchenden Mediums zwischen den endseitigen Anformungen (31) der längsseitigen Führungskörper (11, 12) angeordnet sind.

5. Messvorrichtung nach Anspruch 1, **dadurch gekennzeichnet, dass** zwei längsseitige Führungskörper (11, 32) vorgesehen sind, welche auf unterschiedlichen Seiten der Dichtungsebene (ε) liegen, wobei eine Führungsnut (30) für einen längsseitigen Führungskörper (32) im Sensorträger (1) parallel zur Achse (7') des Messkanals ausgebildet ist.

## Claims

1. Electrochemical measuring device comprising an essentially planar sensor substrate (1) with at least one electrochemical sensor, and a cover part (2) in which a tunnel-shaped flow channel (7) is formed, at least one guiding groove (8, 9, 30) being provided in parallel with the flow channel (7), and a sealing element (10) which is positioned between the sensor substrate (1) and the cover part (2) to seal the flow channel (7), said sealing element (10) featuring guiding bodies (11, 12, 32) along its long side, at least one of which guiding bodies projects into the guiding groove (8, 9) of the cover part (2), and narrow sealing lips (13, 14) bounding the flow channel (7) being an integral part of the sealing element (10), **wherein** each of the short sides of the sealing element (10) is provided with a guiding body (26, 27) projecting into a recess (28, 29) in the sensor substrate (1), which guiding bodies (26, 27) are disposed on that side of a sealing plane (ε) defined by the sealing lips (13, 14), which faces away from the cover part (2).

2. Measuring device according to claim 1, wherein two longitudinal guiding bodies (11, 12) are provided, which are disposed on the side of the sealing plane (ε) facing towards to the cover part (2), and both ends of which have moulded-on projections (31) pointing towards the axis (7') of the sample channel (7), which overlap at least partially the guiding bodies (26, 27) positioned on the short side of the sealing element (10).

3. Measuring device according to claim 1 or 2, wherein a third longitudinal guiding body (32) of the sealing element (10) is provided on the opposite side of the sealing plane (ε), which projects into a guiding groove (30) in the sensor substrate (1).

4. Measuring device according to claim 2 or 3, wherein the inlet and outlet means (22, 23) for feeding and draining the sample medium are positioned between the projections (31) on the ends of the longitudinal guiding bodies (11, 12).

5. Measuring device according to claim 1, wherein two longitudinal guiding bodies (11, 32) are provided, which are disposed on opposite sides of the sealing plane (ε), one guiding groove (30) for one longitudinal guiding body (32) being disposed in the sensor substrate (1) in parallel with the axis (7') of the flow channel.

## Revendications

1. Dispositif de mesure électrochimique, comportant un support de capteur (1), sensiblement en plan, présentant au moins un capteur électrochimique, avec une partie de recouvrement (2), dans laquelle est creusé un canal de mesure (7) en forme de tunnel, parallèlement au canal de mesure (7) étant réalisée au moins une rainure de guidage (8, 9, 30), avec un élément d'étanchéité (10) disposé entre le support de capteur (1) et la partie de recouvrement (20), afin de fermer hermétiquement le canal de mesure (7), l'élément d'étanchéité (10) présentant sur le côté longitudinal des corps de guidage (11, 12, 32), dont au moins l'un pénètre dans la rainure de guidage (8, 9) de la partie de recouvrement (2), et, sur l'élément d'étanchéité (10) étant formées, d'un seul tenant, des lèvres d'étanchéité (13, 14) étroites, délimitant le canal de mesure (7), **caractérisé en ce que** l'élément d'étanchéité (10) présente, sur chaque côté étroit, un corps de guidage (26, 27) pénétrant respectivement dans un évidement (28, 29), ménagé dans le support de capteur, lesdits corps de guidage (26, 27) étant situés sur le côté, opposé à la partie de recouvrement (2), d'un plan d'étanchéité (ε) défini par les lèvres d'étanchéité (13, 14).

2. Dispositif de mesure selon la revendication 1, **caractérisé en ce que** deux corps de guidage (11, 12), situés du côté longitudinal, sont prévus, disposés sur le côté, tourné vers la partie de recouvrement (2), du plan d'étanchéité (ε) et présentant, sur les deux extrémités, des languettes (31) tournées dans la direction de l'axe (7') du canal de sonde (7), languettes chevauchant au moins partiellement les corps de guidage (26, 27) disposés sur le côté étroit de l'élément d'étanchéité (10).

3. Dispositif de mesure selon la revendication 1 ou 2, **caractérisé en ce qu'**un troisième corps de guidage (32), situé du côté longitudinal, de l'élément d'étanchéité (10) est prévu sur l'autre côté du plan d'étanchéité (ε), corps de guidage qui pénètre dans une rainure de guidage (30) ménagée dans le support de capteur (1).

4. Dispositif de mesure selon la revendication 2 ou 3, **caractérisé en ce que** les raccordements (22, 23) sont disposés pour assurer l'amenée, respectivement l'évacuation du fluide à examiner, entre les languettes (31), situées côté extrémité, des corps de guidage (11, 12) situés côté longitudinal.

5. Dispositif de mesure selon la revendication 1, **caractérisé en ce que** deux corps de guidage (11, 32), situés côté longitudinal, sont prévus, situés sur des côtés différents du plan d'étanchéité (ε), une rainure de guidage (30) étant réalisée, pour un corps de guidage (32) situé du côté longitudinal, dans le support de capteur (1), parallèlement à l'axe (7') du canal de mesure.
